# EUROPÄISCHE PATENTSCHRIFT

(11) **EP 0 529 346 B1**
(45) Veröffentlichungstag und Bekanntmachung des Hinweises auf die Patenterteilung: **13.11.1996**
(21) Anmeldenummer: 92113163.7
(22) Anmeldetag: 01.08.1992
(51) Int. Cl.: B60Q 1/52, B60R 16/02

(54) **Einrichtung zum sichtweitenabhängigen Schalten einer Warneinrichtung eines Fahrzeuges**
Device for switching an alarm device according to the visual range
Dispositif d'alarme pour véhicule actionné en fonction de la visibilité

(30) Priorität: 29.08.1991 DE 4128708
(43) Veröffentlichungstag der Anmeldung: 03.03.1993
(73) Patentinhaber: ROBERT BOSCH GMBH, 70442 Stuttgart (DE)
(72) Erfinder: Winner, Hermann, Dr. Dipl.-Phys., W-7500 Karlsruhe (DE)

(56) Entgegenhaltungen:
- DE-A- 3 637 165
- FR-A- 2 560 353
- US-A- 2 999 999
- US-A- 4 102 426

## Beschreibung

### Stand der Technik

Die Erfindung geht aus von einer Einrichtung zum Ein- oder Ausschalten einer Warneinrichtung eines Fahrzeuges nach der Gattung der Hauptansprüche 1 und 6, die der Einrichtung nach der US-A-4,102,426 entspricht.

Warneinrichtungen wie beispielsweise Nebelschlußleuchten an Kraftfahrzeugen sind schon bekannt. Eine derartige Nebelschlußleuchte wird beispielsweise bei schlechten Sichtverhältnissen auf der Straße eingeschaltet, um mit ihrem relativ starkem Licht nachfolgende Fahrzeuge aufmerksam zu machen, damit diese den erforderlichen Sicherheitsabstand einhalten. Die Bedienung einer derartigen Warneinrichtung erfolgt durch den Fahrer. Oftmals bessern sich die Sichtverhältnisse schlagartig, wobei aber die Warneinrichtung häufig vom Fahrer nicht sogleich ausgeschaltet wird. Durch das helle Licht der Warneinrichtung entsteht für nachfolgende Fahrzeuge eine starke Blendwirkung, die zu einer nicht unerheblichen Verkehrsgefährdung führen kann.

Aus der US-A-4,102,426 ist eine Sicherheitsvorrichtung für ein Fahrzeug bekannt, bei der bei Auftreten von Nebel ein Nebelsensor ein Signal abgibt, das zum Abbremsen des Fahrzeugs verwendet wird. Gleichzeitig werden dabei die Nebelscheinwerfer des Fahrzeugs eingeschaltet. Der Nebelsensor sendet Licht aus, das vom Nebel reflektiert und von einer Fotozelle empfangen wird. Zur Auswertung eines Nebelsignals kann auch der vom Nebel absorbierte Schall verwendet werden.

Aus der DE-A-36 37 165 ist ein Verfahren und eine Einrichtung zum Verhindern von Zusammenstößen von Kraftfahrzeugen bekannt. Dabei ist das Fahrzeug mit Sensorsystemen ausgebildet, die Situations-, Fahrzeug- und Umweltparameter erfassen und auswerten. Je nach dem ermittelten Gefährlichkeitsgrad der Situation werden Alarmstufen ausgelöst und geeignete Gegenmaßnahmen getroffen. Damit soll verhindert werden, daß im Straßenverkehr Auffahrunfälle entstehen, die auf eine momentane Unachtsamkeit des Fahrzeugführers zurückzuführen sind.

### Vorteile der Erfindung

Die erfindungsgemäße Einrichtung mit den kennzeichnenden Merkmalen der Hauptansprüche 1 und 6 hat demgegenüber den Vorteil, daß die Funktion der Warneinrichtung ausgeschaltet wird, obgleich bei guter Sichtweite der Schalter für die Warneinrichtung eingeschaltet ist. Bei guter Sichtweite würde eine eingeschaltete Warnlampe andere Verkehrsteilnehmer blenden und dadurch gefährden. Bei schlechten Sichtverhältnissen bleibt dagegen die Warneinrichtung eingeschaltet, so daß ihre Warnfunktion erkennbar ist.

Durch die in den Unteransprüchen aufgeführten Maßnahmen sind vorteilhafte Verbesserungen und Weiterbildungen der im Hauptanspruch angegebenen Einrichtung möglich. Besonders vorteilhaft ist, daß der Grenzwert zum Abschalten der Warneinrichtung manuell vorgebbar ist. Dadurch kann eine leichte Anpassung an die verschiedenen Straßenverhältnisse durchgeführt werden. Da auf Autobahnen üblicherweise mit höheren Geschwindigkeiten gefahren wird, kann der Grenzwert entsprechend hoch angesetzt werden. Bei Landstraßen oder innerörtlichen Straßen wird er entsprechend reduziert.

Besonders günstig ist auch eine geschwindigkeitsabhängige Grenzwertvorgabe. Da bei guter Sicht im allgemeinen mit einer höheren Geschwindigkeit gefahren wird, kann auch der Grenzwert entsprechend heraufgesetzt werden. Dabei ergibt sich der Vorteil, daß bei Überschreiten des Grenzwertes gute Sichtverhältnisse angenommen werden können, so daß dann die Warneinrichtung automatisch abgeschaltet werden kann.

Als günstig anzusehen ist weiter eine zeitliche Verzögerung des Ein- bzw. Auschalten der Warneinrichtung. Insbesondere bei Sichtweiten im vorgegebenen Grenzbereich wird dadurch ein ständiges Ein-/Auschalten der Warneinrichtung vermieden, so daß andere Verkehrsteilnehmer nicht unnötig irritiert werden.

Vorteilhaft ist ferner, daß der Fahrer durch ein Lichtzeichen oder ein akustisches Signal an das Ein- oder Ausschalten der Warneinrichtung erinnert wird.

Weitere Vorteile der Erfindung sind der Beschreibung entnehmbar.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild der Einrichtung, Figur 2 ein Blockschaltbild der Steuerung, Figur 3 eine erste Funktionstabelle und Figur 4 eine zweite Funktionstabelle.

### Beschreibung des Ausführungsbeispiels

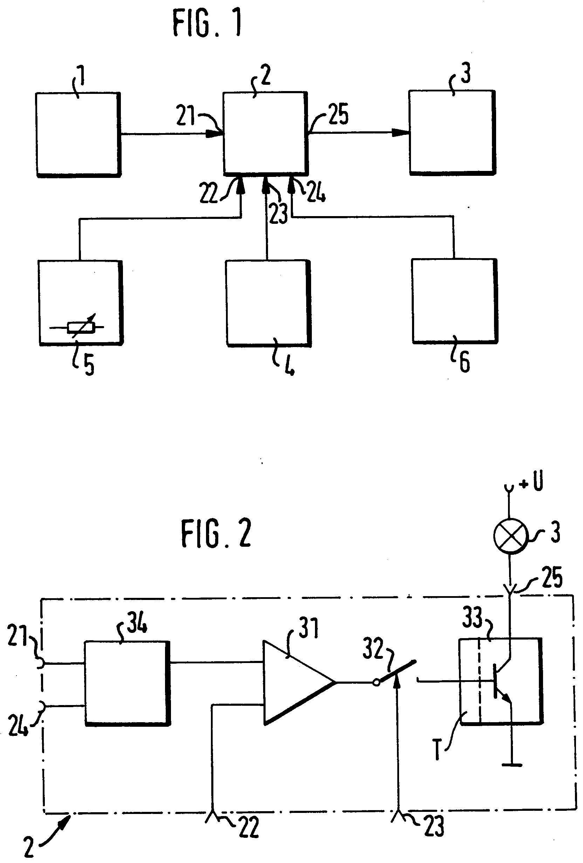

Das Blockschaltbild der Figur 1 zeigt einen Sichtweitenschätzer 1, der mit einem Eingang 21 einer Steuerung 2 verbunden ist. Ein Ausgang 25 der Steuerung 2 ist mit einer Warneinrichtung 3 verbunden. Die Warneinrichtung 3 ist beispielsweise eine Nebelschlußleuchte eines Kraftfahrzeuges. Die Steuerung 2 weist weitere Eingänge 22 bis 24 auf, an denen ein manueller Grenzwertgeber 5, eine Schaltung 4 zum Schalten der Warneinrichtung 3 sowie ein Geschwindigkeitssignalgeber 6 als weiterer Sichtweitenschätzer anschließbar sind. Der Sichtweitenschätzer 1 weist eine in der Fototechnik bekannte Fokusfalle auf. Eine Abbildungsoptik ist so dimensioniert, daß Objekte erst ab einem gewissen Abstand, beispielsweise 50 Metern, scharf abgebildet werden. In der Bildebene kann eine Kontrastmessung den dann hohen Kontrast ermitteln und eine entsprechende Information abgeben. In weiterer Ausgestaltung der Erfindung ist vorgesehen, die ermittelten Werte durch Mittelwertbildung zu gewichten und mit oder ohne Verzögerung auszusenden. Der manuelle Grenzwertgeber 5 ist eine Eingabeeinrichtung, mit der ein Grenzwert in die Steuerung 2 eingebbar ist, der als Schwellwert die Warneinrichtung 3 schaltet. Im einfachsten Fall weist der Grenzwertgeber 5 ein Potentiometer auf, das einen Referenzwert an einen Komparator 31 der Steuerung 2 abgibt. Es sind aber auch Grenzwertgeber mit digitaler Eingabe vorsehbar. Mit dem Schalter 4 erfolgt eine Vorwahl zum Einschalten der Warneinrichtung 3. Der Schalter 4 wird beispielsweise vom Fahrer des Fahrzeuges eingeschaltet, wenn aufgrund schlechter Sichtverhältnisse die Warneinrichtung leuchten soll. Die Steuerung 2 entscheidet jedoch anhand der Sichtweite, ob die Sichtverhältnisse ein Einschalten der Warneinrichtung 3 zulassen. Der Geschwindigkeitssignalgeber 6 kann anstelle eines Tachometers auch ein Radsensor oder ein entsprechender Getriebedrehzahlsensor sein. Als Warneinrichtung 3 kann anstelle einer Nebelschlußleuchte ein Hubsignal, Blaulicht- oder Gelblichtsignal von Polizei, Feuerwehr oder Krankenwagen geschaltet werden. Es sind aber auch Nebelscheinwerfers des Fahrzeuges und dergleichen schaltbar.

Das Blockschaltbild der Figur 2 zeigt den prinzipiellen Aufbau der Steuerung 2. Das Signal des Sichtweitenschätzers 1 wird über einen Eingang 21 beispielsweise auf eine Signal-Anpaßschaltung 34 gegeben, dessen Ausgang mit dem einen Eingang eines Komparators 31 verbunden ist. Ein weiterer Eingang 24 der Signal-Anpaßschaltung 34 ist alternativ zum Anschluß des Geschwindigkeits-Signalgebers 6 verwendbar. Die Signal-Anpaßschaltung 34 erzeugt eine Signalanpassung zu dem nachgeschalteten Komparator 31. Sie kann entsprechend vereinfacht werden, wenn nur ein Signalgeber vorgesehen ist.

Der manuelle Grenzwertgeber 5 ist mit dem zweiten Eingang des Komparators 31 verbunden und gibt den oberen oder unteren Grenzwert für den Schaltpunkt des Komparators 31 an. Der Ausgang des Komparators 31 ist mit einem Steuerschalter 32 verbunden, der auf den Steuereingang eines Schalttransistors 33 wirkt. Dem Schalttransistor 33 ist wahlweise ein Zeitverzögerungsglied T vorgeschaltet, mit dem das Ein- und/oder Ausschalten der Warneinrichtung 3 zeitlich verzögert werden kann. Der Ausgang 25 des Schalttransistors 33 ist mit der Warneinrichtung 3 verbunden, die ihrerseits an der Versorgungsspannung U liegt. Der Steuerschalter 32 ist über den Eingang 23 mit dem Schalter 4 verbunden.

Im folgenden wird die Funktionsweise der Einrichtung beschrieben. Der Fahrer des Fahrzeuges betätigt zunächst zum Einschalten der Warneinrichtung 3 den Schalter 4. Durch den Schalter 4 wird der Steuerschalter 32 geschlossen, so daß der Ausgang des Komparators 31 mit dem Steuereingang des Schalttransistors 33 verbunden ist.

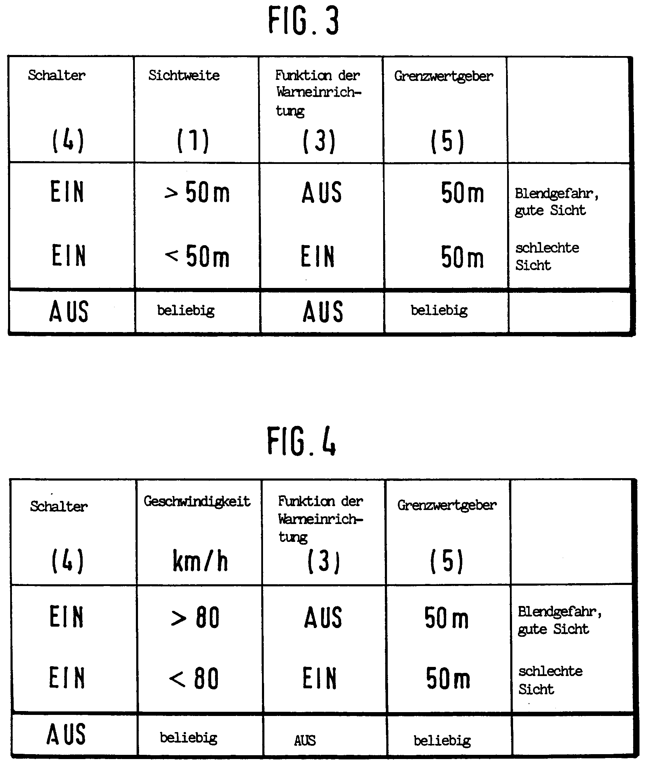

Die genauere Funktionsweise wird anhand der Tabelle der Figuren 3 und 4 erläutert. In diesem Ausführungsbeispiel ist ein Sichtweitenschätzer 1 vorgesehen, der nach dem Prinzip der Fokusfalle arbeitet. Gemäß der Figur 3 wird zunächst bei eingeschaltetem Schalter 4 zunächst vom Sichtweitenschätzer 1 die ermittelte Sichtweite auf den Eingang des Komparators 31 gegeben. Ist beispielsweise mit der manuellen Grenzwerteingabe 5 ein Grenzwert von 50 m eingegeben und die Sichtweite größer als 50 m, dann bleibt der Ausgang 25 des Schalttransistors gesperrt d. h. die Warneinrichtung 3 bleibt ausgeschaltet, obgleich der Schalter 4 für die Warneinrichtung eingeschaltet ist. In diesem Fall liegt eine gute Sicht vor, die nur zu einer Blendung anderer Verkehrsteilnehmer führen würde.

Ist dagegen die Sichtweite kleiner als 50 Meter, dann werden schlechte Sichtverhältnisse angenommen. Der Komparatorausgang steuert über den geschlossenen Steuerschalter 32 den Steuereingang des Schalttransistors 33 an, so daß die Warneinrichtung 3 nunmehr eingeschaltet ist.

Ist der Schalter 4, der durch den Fahrer bedient wird, ausgeschaltet, dann ist die Funktion der automatischen Schaltung unterbunden.

In der Funktionstabelle der Figur 4 ist ein weiteres Ausführungsbeispiel dargestellt, bei dem der Sichtweitenschätzer durch das Signal des Geschwindigkeitsgebers 6 ersetzt wurde. Ist beispielsweise die Geschwindigkeit größer als 80 km/h und der voreingestellte Grenzwert wieder 50 Meter, dann kann von guten Sichtverhältnissen ausgegangen werden. Die Warneinrichtung 3 ist ausgeschaltet. Ist dagegen die Geschwindigkeit kleiner als 80 Km/h, dann wird angenommen, daß bei eingeschaltetem Schalter 4 schlechte Sichtverhältnisse wie Nebel oder dergleichen vorliegen, so daß nunmehr die Warneinrichtung 3 wieder eingeschaltet ist. Der manuelle Grenzwertgeber 5 kann natürlich als Grenzwert auch einen Geschwindigkeitswert vorgeben, sodaß keine aufwendige Signalumwandlung erforderlich ist.

Der Schalttransistor 33 kann an seinem Eingang mit einer Zeitverzögerungs-Schaltung ausgebildet werden, die in der Figur 2 jedoch nicht dargestellt wurde. Dadurch wird das Einschalten des Schalttransistors oder auch das Ausschalten zeitlich verzögert, so daß ein unerwünschtes Flackern der Warnlampe unterbleibt.

Aufgrund der automatischen Abschaltung der Warneinrichtung 3 bei guten Sichtverhältnissen wird in vorteilhafter Weise eine Blendung anderer Verkehrsteilnehmer unterbunden, ohne daß der Fahrer sogleich an das Abschalten der Warneinrichtung 3 denken muß.

In weiterer Ausgestaltung der Erfindung ist vorgesehen, anstelle des automatischen Schaltens ein optisches oder akustisches Warnsignal im Fahrzeug auszugeben, so daß der Fahrer an das Aus- oder Einschalten der Warneinrichtung erinnert wird. Dabei kann das Warnsignal durch eine Lampe 3 (z. B. Blinken) oder einen Piepser/Lautsprecher erzeugt werden. In diesem Fall wird das Warnsignal mit der Steuerschaltung 2 gemäß der Figur 2 im Fahrzeug ausgegeben, sodaß der Fahrer nach dem Ansprechen des Warnsignals die Nebelschlußleuchte mit einem weiteren (nicht dargestellten) Schalter manuell einschalten kann.

## Patentansprüche

1. Einrichtung zum Ein- oder Ausschalten einer Warneinrichtung eines Fahrzeugs, insbesondere der Nebelschlußleuchte eines Kraftfahrzeugs, die einen Sichtweitenschätzer (1, 6) aufweist, mit dem die Sichtweite in der Umgebung des fahrenden Fahrzeugs ermittelbar ist, wobei der Sichtweitenschätzer (1,6) die Sichtweiteninformation an eine Steuerung (2) abgibt, die bei Über- oder Unterschreiten eines vorvergebenen Grenzwertes für die Sichtweite die Warneinrichtung (3) schaltet, dadurch gekennzeichnet, daß der Sichtweitenschätzer (1) eine optische Einrichtung ist, die die Sichtweite durch Kontrastmessung nach dem Prinzip einer Fokusfalle ermittelt.

2. Einrichtung nach Anspruch 1, dadurch gekennzeichnet, daß der Grenzwert manuell einstellbar ist.

3. Einrichtung nach einem der Ansprüche 1 oder 2, dadurch gekennzeichnet, daß der Sichtweitenschätzer (1, 6) alternativ einen Geschwindigkeitssignalgeber (6) enthalt und daß die Sichtweite aus dem Geschwindigkeitssignal ableitbar ist.

4. Einrichtung nach einem der vorhergehenden Ansprüche, dadurch gekennzeichnet, daß die Warneinrichtung (3) verzögert ein- und/oder ausschaltbar ist.

5. Einrichtung nach einem der vorgehenden Ansprüche, dadurch gekennzeichnet, daß die Einrichtung eine Steuerung (2) aufweist, daß die Steuerung (2) Eingänge (21 bis 24) für den Sichtweitenschätzer (1), die manuelle Grenzwertvorgaben (5) und/oder den Geschwindigkeitssignalgeber (6) aufweist und daß die Steuerung (2) über einen Steuerschalter (32) und einen Schalttransistor (33) mit der Warneinrichtung (3) verbunden ist.

6. Einrichtung zum Ein- oder Ausschalten einer Warneinrichtung eines Fahrzeuges, insbesondere der Nebelschlußleuchte eines Fahrzeuges, mit einem Sichtweitenschätzer (1, 6), mit dem die Sichtweite in der Umgebung des fahrenden Fahrzeuges ermittelbar ist, wobei der Sichtweitenschätzer (1, 6) die Sichtweiteninformation an eine Steuerung (2) abgibt und wobei die Steuerung (2) bei Über- oder Unterschreiten eines vorgegebenen Grenzwertes für die Sichtweite ein optisches oder akustisches Warnsignal im Fahrzeug abgibt und den Fahrer auf das Einschalten oder Ausschalten der Warneinrichtung aufmerksam macht, dadurch gekennzeichnet, daß der Sichtweitenschätzer eine optische Einrichtung ist, die die Sichtweite durch Konstrastmessung nach dem Prinzip einer Fokusfalle ermittelt.

## Claims

1. Device for switching on or switching off a warning device of a vehicle, in particular the rear fog lamp of a motor vehicle, which device has a visibility estimator (1, 6), with which the visibility in the environment of the travelling vehicle can be determined, the visibility estimator (1, 6) emitting the visibility information to a controller (2) which, if the visibility rises above or falls below a previously assigned limiting value, switches the warning device (3), characterized in that the visibility estimator (1) is an optical device which determines the visibility by means of contrast measurement in accordance with the principle of a focus trap.

2. Device according to Claim 1, characterized in that the limiting value can be adjusted manually.

3. Device according to either Claims 1 or 2, characterized in that the visibility estimator (1, 6) alternatively contains a speed signal transmitter (6) and in that the visibility can be derived from the speed signal.

4. Device according to one of the preceding claims, characterized in that the warning device (3) can be switched on and/or off with a delay.

5. Device according to one of the preceding claims, characterized in that the device has a controller (2), in that the controller (2) has inputs (21 to 24) for the visibility estimator (1), the manual limiting value presets (5) and/or the speed signal transmitter (6), and in that the controller (2) is connected to the warning device (3) via a control switch (32) and a switching transistor (33).

6. Device for switching on or switching off a warning device of a vehicle, in particular the rear fog lamp of a motor vehicle, which device has a visibility estimator (1, 6), with which the visibility in the environment of the travelling vehicle can be determined, the visibility estimator (1, 6) emitting the visibility information to a controller (2) and the controller (2) emitting an optical or acoustic warning signal in the vehicle if the visibility rises above or falls below a predetermined limiting value and drawing the attention of the driver to the switching on or switching off of the warning device, characterized in that the visibility estimator is an optical device which determines the visibility by means of contrast measurement in accordance with the principle of a focus trap.

## Revendications

1. Installation pour brancher ou couper un dispositif de signalisation d'un véhicule, notamment les feux de brouillard d'un véhicule automobile, comprenant un dispositif (1, 6) évaluant la visibilité qui détermine la distance de visibilité dans l'environnement du véhicule en circulation, le dispositif (1, 6) évaluant la visibilité fournissant l'information de distance de visibilité a un dispositif de commande (2) qui, en cas de dépassement vers le haut ou vers le bas d'un seuil prédéterminé de la distance de visibilité, commute le dispositif de signalisation (3),
caractérisée en ce que
le dispositif (1) évaluant la visibilité est une installation optique qui détermine la distance de visibilité par une mesure de contraste selon le principe d'un piège de focalisation.

2. Installation selon la revendication 1,
caractérisée en ce que
la valeur limite se règle manuellement.

3. Installation selon les revendications 1 ou 2,
caractérisée en ce que
le dispositif (1, 6) évaluant la distance de visibilité comporte en variante un générateur de signal de vitesse (6), et la distance de visibilité se déduit du signal de vitesse.

4. Installation selon l'une des revendications précédentes,
caractérisée en ce que
le dispositif de signalisation (3) est fermé et/ou coupé de manière temporisée.

5. Installation selon l'une des revendications précédentes,
caractérisée en ce que
elle comporte un dispositif de commande (2) comportant des entrées (21-24) pour le dispositif (1) évaluant la distance de visibilité, avec des valeurs limites prédéterminées manuellement (5), et/ou un générateur de signal de vitesse (6), et le dispositif de commande (2) est relié au dispositif de signalisation (3) par l'intermédiaire d'un interrupteur de commande (32) et d'un transistor de commutation (33).

6. Installation pour brancher ou couper un dispositif de signalisation d'un véhicule, notamment les feux de brouillard d'un véhicule, comprenant un dispositif (1, 6) évaluant la visibilité, qui permet de régler la distance de visibilité dans l'environnement du véhicule en circulation, le dispositif (1,6 ) évaluant la visibilité transmettant l'information de distance de visibilité à un dispositif de commande (2) et cette commande (2), en cas de dépassement d'un seuil prédéterminé vers le haut ou vers le bas pour la distance de visibilité, génère un signal avertisseur optique ou acoustique dans le véhicule et attire l'attention du conducteur sur la nécessité de fermer ou d'ouvrir le dispositif avertisseur,
caractérisée en ce que
le dispositif évaluant la distance de visibilité est une installation optique donnant la distance de visibilité par une mesure de contraste effectuée selon le principe du piège à foyer.
